(19) Europäisches Patentamt / European Patent Office / Office européen des brevets

(11) **EP 2 638 271 B1**

(12) **FASCICULE DE BREVET EUROPEEN**

(45) Date de publication et mention de la délivrance du brevet:
**12.08.2015 Bulletin 2015/33**

(21) Numéro de dépôt: **11794813.3**

(22) Date de dépôt: **10.11.2011**

(51) Int Cl.:
*F02D 41/20* *(2006.01)*   *H02M 3/156* *(2006.01)*
*H02M 3/158* *(2006.01)*   *H01F 7/18* *(2006.01)*
*H01H 47/32* *(2006.01)*   *H02M 3/155* *(2006.01)*

(86) Numéro de dépôt international:
**PCT/FR2011/052623**

(87) Numéro de publication internationale:
**WO 2012/063006 (18.05.2012 Gazette 2012/20)**

(54) **DISPOSITIF POUR L'AUTO-GENERATION D'UNE SURTENSION ET LA COMMANDE SIMULTANEE D'UN ACTIONNEUR COMPORTANT UNE OU PLUSIEURS INDUCTANCES, ET PROCEDE DE COMMANDE D'UN TEL DISPOSITIF**

VORRICHTUNG ZUR SELBSTGENERIERUNG EINER ÜBERSPANNUNG UND ZUR SIMULTANEN STEUERUNG EINES AUS EINER ODER MEHREREN INDUKTIVITÄTEN BESTEHENDEN AKTUATORS, UND STEUERVERFAHREN DAFÜR

DEVICE FOR THE SELF-GENERATION OF AN OVER-VOLTAGE AND FOR THE SIMULTANEOUS CONTROL OF AN ACTUATOR HAVING ONE OR MORE INDUCTANCES, AND CONTROL METHOD THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2010 FR 1059300**

(43) Date de publication de la demande:
**18.09.2013 Bulletin 2013/38**

(73) Titulaire: **Valeo Systèmes de Contrôle Moteur 95800 Cergy (FR)**

(72) Inventeurs:
• **DUPUIS, Dominique**
  **F-95820 Bruyeres Sur Oise (FR)**
• **DE SOUSA, Luis**
  **F-95670 Eragny Sur Oise (FR)**
• **JANINET, Louis**
  **F-95000 Pontoise (FR)**

(74) Mandataire: **Cardon, Nicolas**
  **Valeo Systèmes de Contrôle Moteur**
  **Immeuble Le Delta**
  **14, avenue des Béguines**
  **95800 Cergy St Christophe (FR)**

(56) Documents cités:
  **WO-A1-2010/057893    DE-A1-102008 012 942**
  **FR-A1- 2 735 591      US-A- 6 002 603**

**Description**

L'invention concerne un dispositif permettant simultanément l'élévation de tension et la commande d'un actionneur comportant au moins une inductance. L'invention concerne également un procédé d'élévation de la tension d'alimentation aux bornes d'un tel dispositif et un procédé de commande d'un tel actionneur.

Dans de nombreuses applications automobiles, comme la commande de soupapes électromagnétiques, la commande d'injecteurs ou la commande de moteurs électriques pour véhicule électrique ou hybride, des actionneurs électromagnétiques sont utilisés.

Un actionneur est un dispositif capable d'agir en réponse à une commande électrique. Généralement, un actionneur est muni d'au moins une inductance (ou self inductance) qui, lorsqu'elle est parcourue par un courant, provoque le déplacement d'une pièce mobile (la soupape électromagnétique par exemple).

Dans le cas d'une soupape électromagnétique, l'actionneur est généralement constitué de deux électroaimants : l'un est dédié à l'ouverture de la soupape et l'autre à la fermeture de la soupape.

La soupape est reliée mécaniquement à une palette qui est localisée dans l'entrefer des électroaimants. La palette est attirée par l'un ou l'autre des électroaimants par des forces électromagnétiques lorsque les électroaimants sont magnétisés et elle est rappelée au centre de l'entrefer par des ressorts.

La commande de l'actionneur a généralement lieu à partir d'une source de tension continue. Par conséquent, il est souvent nécessaire d'adopter une architecture de type pont en H pour commander cet actionneur dans les quatre quadrants.

En outre, pour accélérer la commande de l'actionneur, il est souvent utile d'appliquer une surtension aux bornes de l'inductance, de manière à provoquer une mise en action plus rapide de l'actionneur.

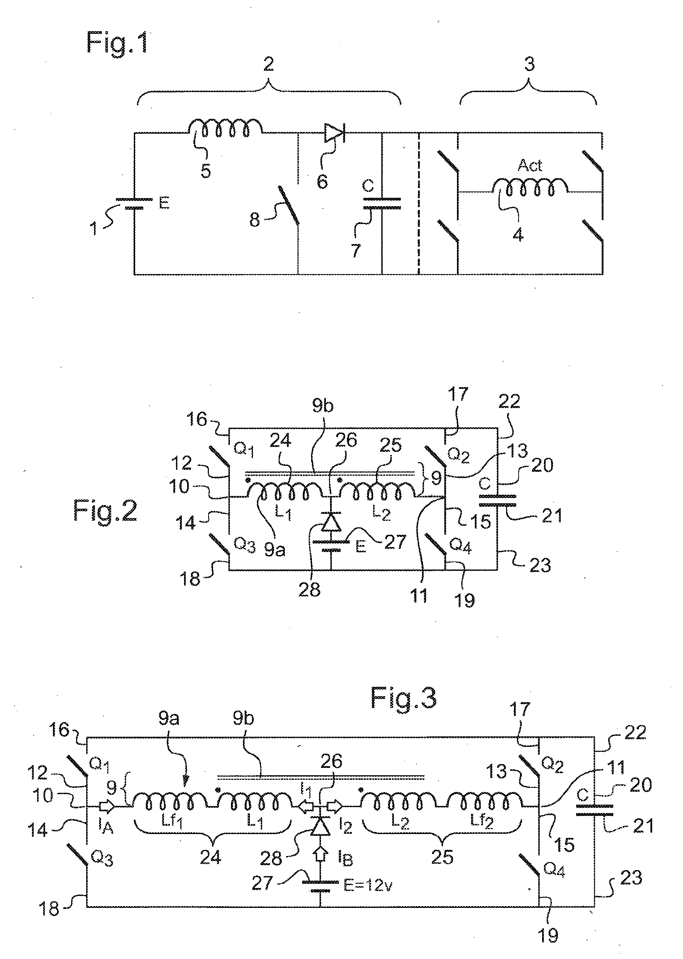

De nombreux dispositifs générateurs de surtension (ou dispositifs élévateur de tension) sont connus. Par exemple, la figure 1 représente un dispositif de l'art antérieur, dans lequel un élévateur de tension 2 est disposé entre la source d'alimentation 1 et le pont en H 3 dans lequel se trouve l'inductance 4 de l'actionneur.

De manière connue, un tel élévateur de tension 2 est composé de :

- une inductance 5 formée par une bobine;
- une diode 6 ;
- un condensateur 7 ;
- un interrupteur 8 constitué par un transistor.

Le fonctionnement d'un tel élévateur de tension peut être divisé en deux phases distinctes selon l'état de l'interrupteur 8 :

- une phase au cours de laquelle l'interrupteur 8 est fermé, ce qui entraîne l'augmentation du courant dans l'inductance 5 et donc le stockage d'une quantité d'énergie sous forme d'énergie magnétique. La diode 6 est alors bloquée et le condensateur 7 est déconnecté de l'alimentation ;
- une phase au cours de laquelle l'interrupteur 8 est ouvert. L'inductance 5 se trouve alors en série avec la source d'alimentation et sa force électromotrice (f.e.m.) s'additionne alors à celle de la source d'alimentation (effet survolteur). Le courant traversant l'inductance traverse ensuite la diode 6 et le condensateur 7. Il en résulte un transfert de l'énergie accumulée dans l'inductance 5 vers le condensateur 7.

Un tel générateur de surtension est généralement relié au pont en H dans lequel se trouve l'inductance de l'actionneur.

Le fait d'utiliser un tel générateur de surtension permet d'accélérer la mise sous tension de l'actionneur. Toutefois, cela augmente le nombre de composants utilisés. Or dans une optique de miniaturisation et de diminution des coûts, on cherche à diminuer le nombre de composants utilisés.

Par conséquent, différentes solutions techniques ont été développées afin de permettre de créer une surtension aux bornes du pont en H, sans pour autant augmenter de manière significative le nombre de composants utilisés.

Ainsi, plusieurs solutions techniques proposent de réutiliser l'inductance de l'actionneur pour réaliser la fonction d'élévation de la tension et ainsi diminuer le nombre de composants utilisés.

Par exemple, dans le document US6948461, l'inductance de l'actionneur est utilisée pour réaliser la fonction d'élévation de la tension. Un interrupteur fait basculer le dispositif du mode « élévateur de tension » vers le mode « commande de l'actionneur » et inversement. Ce dispositif permet bien de réduire le nombre de composants utilisés.

Toutefois, les fonctions « élévation de la tension » et « commande de l'actionneur » ne peuvent pas fonctionner en même temps. En outre, lors du pilotage de l'actionneur, la tension aux bornes de l'inductance ne peut être positive que dans le cas d'une utilisation à deux quadrants et par conséquent, ce montage ne fonctionne que dans le cas d'actionneurs non polarisés. Un autre désavantage de cette solution réside dans le fait que le courant parcourant l'inductance de l'actionneur peut créer des forces parasites sur l'actionneur et donc les fonctions « élévation de la tension » et « commande de l'actionneur » ne sont pas indépendantes.

De même, le document US6175484 décrit un montage, destiné aux injecteurs, dans lequel l'inductance de l'actionneur est réutilisée pour assurer la fonction d'élévation de tension. Dans ce montage, en fonction des interrupteurs fermés, l'actionneur peut soit être alimenté par de la basse tension issue de la batterie, soit par de la haute tension issue de la capacité.

Toutefois, comme dans le document précédent, les fonctions « élévation de la tension » et « commande de l'actionneur » ne sont pas simultanées, ni indépendantes. En outre, ce montage n'est pas non plus adapté pour fonctionner avec des actionneurs polarisés.

On connaît également le document US2006132234 qui décrit un actionneur dans un pont en H. Ce document propose de réutiliser deux interrupteurs du pont en H pour élever la tension d'utilisation, à l'aide de deux inductances externes. Ce montage permet également de limiter le nombre de composants utilisés puisque deux interrupteurs du pont en H sont réutilisés pour assurer la fonction « élévation de la tension ».

Toutefois, étant donné que les interrupteurs permettent à la fois d'assurer la fonction « élévation de tension » et la fonction « commande de l'actionneur », ces deux fonctions ne peuvent pas être assurées simultanément. En outre, le gain de place assuré par ce montage n'est pas très important puisque les interrupteurs ne sont pas des composants très encombrants en comparaison des inductances.

On connaît également le document DE102008012942 qui décrit un actionneur dans un pont en H. Le montage décrit dans ce document permet d'assurer la fonction « élévation de tension » et la fonction « commande de l'actionneur » de manière simultanée. Toutefois, ce montage n'est pas adapté pour commander une soupape électromagnétique E-valve multicylindre.

L'invention vise à remédier aux inconvénients de l'état de la technique en proposant un dispositif de commande d'un actionneur et d'élévation simultanée de la tension, qui permette un gain de place en réutilisant des composants de l'actionneur pour réaliser la surtension.

Un autre objet de l'invention est de proposer un dispositif qui permette simultanément de réaliser l'élévation de la tension et la commande de l'actionneur grâce à des composants communs, tout en maintenant ces deux fonctions indépendantes l'unes de l'autres.

Un autre objet de l'invention est de proposer un dispositif générateur de surtension qui n'utilise pas d'autre inductance que celle de l'actionneur, tout en ayant aucune influence sur l'actionneur. A cet effet, l'invention concerne un dispositif pour l'auto-génération d'une surtension et la commande simultanée d'un actionneur comportant au moins une première inductance, la première inductance étant formée par deux portions de bobine couplées entre lesquelles se trouve une borne intermédiaire,

- la première inductance étant reliée à quatre éléments de commutation Q1, Q2, Q3 et Q4, les quatre éléments de commutation Q1, Q2, Q3 et Q4 formant avec la première inductance un premier pont en H, les éléments de commutation Q1 et Q3 formant un premier bras du H, les éléments de commutation Q2 et Q4 formant un deuxième bras du H, la première inductance formant la barre horizontale du H ;
- une charge étant reliée en parallèle d'un des bras du pont en H ;
- la borne intermédiaire de la première inductance étant reliée à une source d'alimentation, le dispositif étant remarquable en ce qu'il comporte :
- une deuxième inductance, la deuxième inductance étant formée par deux portions de bobine couplées entre lesquelles se trouve une borne intermédiaire,
- deux éléments de commutation supplémentaires Q5 et Q6, ces deux éléments de commutations supplémentaires Q5 et Q6 et la deuxième inductance étant reliés au premier pont en H de manière à ce que les deux éléments de commutation supplémentaires Q5, Q6 et la deuxième inductance forment avec un des bras du premier pont en H un deuxième pont en H;

la source d'alimentation étant reliée à la borne intermédiaire de la deuxième inductance.

En d'autres termes, le dispositif selon l'invention comporte :

- une première inductance présentant une première borne et une deuxième borne ;
  un premier élément de commutation Q1 présentant une première borne et une deuxième borne, la première borne du premier élément de commutation Q1 étant reliée à la première borne de la première inductance ;
- un deuxième élément de commutation Q2 présentant une première borne et une deuxième borne, la première borne du deuxième élément de commutation Q2 étant reliée à la deuxième borne de la première inductance ;
- un troisième élément de commutation Q3 présentant une première et une deuxième borne, la première borne du troisième élément de commutation Q3 étant reliée à la première borne de la première inductance ;
- un quatrième élément de commutation Q4 présentant une première et une deuxième borne, la première borne du quatrième élément de commutation Q4 étant reliée à la deuxième borne de la première inductance.

En outre, le dispositif peut être tel que :

- la deuxième borne du premier élément de commutation Q1 est reliée à la deuxième borne du deuxième élément de commutation Q2 ;
- la deuxième borne du troisième élément de commutation Q3 est reliée à la masse ;
- la deuxième borne du quatrième élément de commutation Q4 est reliée à la masse.

Le dispositif selon l'invention peut comprendre en outre une charge présentant une première borne et une deuxième borne. La charge peut être reliée en parallèle du premier ou du deuxième bras du pont en H. La première borne de la charge est donc reliée à la deuxième borne de Q2 ou de Q1. La deuxième borne de la charge est reliée à la masse.

Selon l'invention, la première inductance, qui fait partie de l'actionneur à commander, est séparée en deux portions de bobine qui sont couplées. Ce couplage est notamment obtenu lorsque les deux portions de bobine entourent un même noyau magnétique, de sorte que lorsqu'on envoie un courant dans la première portion de bobine et le courant opposé dans la deuxième portion de bobine, leurs effets mutuels s'annulent, lesdits courant et courant opposé ayant un rapport égal au rapport des nombres de spires de la première et de la deuxième portion de bobine. Ainsi, aucune force électromotrice n'est créée par la première inductance dans son ensemble et le noyau magnétique que les deux portions de bobine entourent n'effectue aucun mouvement.

Entre les deux portions de bobine se trouve une borne intermédiaire. Une source d'alimentation est reliée à cette borne intermédiaire.

Le fait de relier la source d'alimentation à la borne intermédiaire de la première inductance de l'actionneur permet de créer une surtension en utilisant la première inductance, sans que cela influence la commande de l'actionneur.

En effet, la source d'alimentation étant reliée à la borne intermédiaire de la première inductance, les courants d'alimentation issus de la source d'alimentation circulent dans les deux portions de bobine dans des sens opposés et selon des valeurs proportionnelles au nombre de spires de la portion de bobine traversée, ce qui annule la force électromotrice globale de la première inductance lors de la génération de la surtension.

En effet, les deux portions de bobine étant couplées, les effets mutuels des inductances L1 et L2 des deux portions de bobine s'annulent et il n'y a pas de mouvement de l'actionneur.

Toutefois, comme le couplage entre les deux portions de bobine n'est jamais parfait, il existe toujours une inductance de fuite Lf1 et Lf2 associée à chaque portion de bobine. Les inductances de fuite Lf1 et Lf2, qui sont dues à des petites imperfections dans le couplage, ne sont jamais égales et ce sont ces inductances de fuite qui permettent l'élévation de la tension.

Par conséquent, si on veut juste réaliser une élévation de la tension aux bornes de la charge, sans que cela n'influence l'actionneur, il faut commander les éléments de commutation Q1, Q2, Q3 et Q4 de façon à ce que les courants $I_1$ et $I_2$ qui parcourent chacune des portions de bobine aient la même valeur absolue.

Le dispositif selon l'invention rend donc les fonctions « élévation de la tension » et « commande de l'actionneur » indépendantes.

Au contraire, lorsque l'on veut en outre commander l'actionneur, il faut rendre les courants $I_1$ et $I_2$ qui parcourt les deux portions de bobine très distincts afin de créer une force électromotrice dans la première inductance.

Les courants $I_1$ et $I_2$ sont commandés à l'aide des éléments de commutation Q1, Q2, Q3, Q4. Les rapports cycliques de ces éléments de commutation sont choisis de manière à permettre soit uniquement l'élévation de la tension, soit uniquement la création d'une force électromotrice dans la première inductance, ou alors pour permettre les deux.

Par rapport cyclique, on entend les pourcentages d'ouverture et de fermeture de chaque élément de commutation.

Pour élever la tension aux bornes de la charge, sans créer de force électromotrice dans la première inductance, il faut que les éléments de commutation Q3 et Q4 aient les mêmes rapports cycliques. Au contraire, pour créer une force électromotrice, il faut que les rapports cycliques de Q3 et de Q4 diffèrent l'un de l'autre.

Avantageusement, une première diode est insérée entre la borne intermédiaire de la première inductance et la source d'alimentation. Cette première diode permet d'éviter que la présence de la source d'alimentation sur la borne intermédiaire ne vienne modifier la dynamique de tension de l'actionneur. Grâce à cette première diode, la borne intermédiaire peut prendre un potentiel différent de celui imposé par la source d'alimentation.

Selon un mode de réalisation de l'invention, la source d'alimentation est une batterie 12 V, ce qui permet d'utiliser facilement ce dispositif dans le domaine automobile. Cette source d'alimentation est branchée entre la masse et la borne intermédiaire. Plus généralement, la source d'alimentation peut délivrer une tension continue, cette tension étant notamment comprise entre 6V et 18V. Le courant délivré par la source d'alimentation peut avoir une valeur de l'ordre d'1A.

La première inductance est de préférence une bobine.

Avantageusement, les deux portions de bobine présentent le même nombre de spires, et sont alors dénommées demi-bobines.

Chaque élément de commutation est de préférence constitué d'un transistor.

Selon un mode de réalisation préféré, la charge est constituée par un condensateur.

La première inductance est de préférence constituée d'une bobine.

Chaque portion de la bobine peut présenter une inductance de l'ordre de quelques mH.

L'actionneur est par exemple un actionneur de soupape électromagnétique, auquel cas le dispositif forme un dispositif de commande d'au moins un actionneur de soupape électromagnétique. L'invention peut alors concerner un ensemble comprenant le dispositif de commande d'actionneur(s) de soupape électromagnétique et ledit ou lesdits actionneurs.

La première inductance permet de préférence le déplacement de la pièce actionnée dans un sens, la deuxième inductance permettant le déplacement de la pièce actionnée dans le sens opposé.

Avantageusement, une deuxième diode est insérée entre la borne intermédiaire de la deuxième inductance et la source d'alimentation.

La deuxième inductance est de préférence une bobine.

Les deux portions de bobine de la deuxième inductance sont couplées, c'est-à-dire qu'elles entourent un même noyau magnétique.

Avantageusement, les deux portions de bobine de la deuxième inductance présentent le même nombre de spires et sont enroulées autour d'un même second noyau magnétique.

Comme déjà mentionné, l'invention est tout particulièrement adaptée au cas où l'actionneur est un actionneur pour soupape électromagnétique.

L'invention concerne également un procédé d'élévation de tension aux bornes de la charge d'un dispositif tel que décrit précédemment, le procédé comprenant une étape de contrôle, à l'aide des éléments de commutation, de la somme des courants qui parcourent chacune des portions de bobine.

En effet, lorsque l'on veut élever la tension, le courant fourni par la source d'alimentation sert à alimenter le réseau d'alimentation de la commande de l'actionneur. Ce courant $I_B$ fourni par la source d'alimentation est alors égal à la somme du courant $I_1$ qui parcoure la première portion de bobine et du courant $I_2$ qui parcoure la seconde portion de bobine :

$$I_B = I_1 + I_2$$

Ainsi, pour élever la tension, il suffit de contrôler la somme des courants $I_1$ et $I_2$. Pour cela, on contrôle les temps d'ouverture et de fermeture des transistors Q1, Q2, Q3 et Q4 et donc leurs rapports cycliques.

Pour élever la tension sans que cela n'ait d'effet sur l'actionneur, on choisit de préférence des rapports cycliques égaux pour Q1, Q2 d'une part et pour Q3, Q4 d'autre part.

L'invention concerne également un procédé de commande d'un actionneur à l'aide du dispositif tel que décrit précédemment, ce procédé comportant une étape de contrôle, à l'aide des éléments de commutation, de la différence des courants qui parcourent chaque portion de bobine de la première inductance.

En effet, pour piloter l'actionneur, le courant $I_A$ utile à la génération de la force électromotrice est égal au courant $I_2$ qui parcourt la deuxième portion de bobine de la première inductance, moins le courant $I_1$ qui parcourt la première portion de bobine de la première inductance. En contrôlant la différence $I_2 - I_1$, il est donc possible de piloter l'actionneur. Pour cela, on contrôle également les temps d'ouverture et de fermeture des transistors Q1, Q2, Q3 et Q4 et donc leurs rapports cycliques.

Pour commander l'actionneur, il faut créer une force électromotrice. Pour cela, il faut que les courants $I_1$ et $I_2$ diffèrent au maximum l'un de l'autre. Par conséquent, lorsque l'on veut commander l'actionneur, il est nécessaire de déséquilibrer les rapports cycliques Q3 et Q4, c'est-à-dire de les rendre différents l'un de l'autre.

On peut choisir des rapports cycliques qui permettent simultanément d'élever la tension et de commander l'actionneur. On peut également choisir des rapports cycliques qui réalisent uniquement une des fonctions, indépendamment de l'autre.

Ainsi, ce montage permet de réaliser les deux fonctions d'élévation de la tension et de commande de l'actionneur simultanément et indépendamment l'une de l'autre.

L'invention concerne également un procédé de commande comportant une étape de contrôle, à l'aide des éléments de commutation, de la différence des courants qui parcourent chaque portion de bobine de la deuxième inductance.

Avantageusement, la commande des éléments de commutation a lieu avec des signaux modulés en largeur d'impulsion.

Avantageusement, le procédé selon l'invention comporte une étape de détermination des rapports cycliques des éléments de commutation permettant d'élever la tension aux bornes de la charge et/ou de commander l'actionneur.

L'un au moins des procédés ci-dessus, notamment tous les procédés ci-dessus, est notamment mis en oeuvre à l'aide d'une source d'alimentation branchée entre la masse et au moins une borne intermédiaire d'une inductance, délivrant une tension continue, par exemple comprise entre 6V et 18V.

D'autres caractéristiques et avantages de l'invention ressortiront à la lecture de la description qui suit d'un exemple de réalisation, non limitatif, en référence aux figures annexées, qui illustrent :

- la figure 1, une représentation schématique d'un dispositif de commande d'un actionneur et d'élévation de la tension de l'art antérieur ;
- les figures 2, 3 et 8, une représentation schématique d'un dispositif pour l'auto-génération d'une surtension et la commande simultanée d'un actionneur ;
- les figures 4 et 5, une représentation schématique de l'évolution des courants dans le dispositif des figures 2 et 3 ;
- les figures 6 et 7, un représentation schématique d'un mode de réalisation possible du dispositif de la figure 2 ;
- la figure 9, une représentation schématique d'un dispositif pour l'auto-génération d'une surtension et la commande simultanée d'un actionneur selon l'invention ;
- la figure 10, une représentation schématique d'une boucle d'asservissement permettant de contrôler la commande de l'actionneur à l'aide du dispositif de la figure 9 ;
- la figure 11, une représentation schématique d'une boucle d'asservissement permettant de contrôler l'élévation de la tension aux bornes de la charge du dispositif de la figure 9 ;

- la figure 12, une représentation schématique d'un circuit de commande d'un véhicule électrique qui utilise un dispositif selon l'invention.

Pour plus de clarté, les éléments identiques ou similaires sont repérés par des signes de référence identiques sur l'ensemble des figures.

Les figures 2, 3 et 8 représentent un dispositif pour l'auto-génération d'une surtension et la commande simultanée d'un actionneur 9.

Cet actionneur 9 comporte une première inductance 9a et une pièce mobile 9b également appelée pièce actionnée.

Le dispositif comporte :

- la première inductance 9a de l'actionneur. Cette première inductance présente une première borne 10 et une seconde borne 11 ;
- quatre éléments de commutation Q1, Q2, Q3 et Q4 qui sont ici des transistors MOS.

Le premier élément de commutation Q1 présente une première borne 12 qui est reliée à la première borne 10 de la première inductance 9a.

Le deuxième élément de commutation Q2 présente une première borne 13 qui est reliée à la deuxième borne 11 de la première inductance 9a.

Le troisième élément de commutation Q3 présente une première borne 14 qui est reliée à la première borne 10 de la première inductance 9a.

Le quatrième élément de commutation Q4 présente une première borne 15 qui est reliée à la deuxième borne 11 de la première inductance 9a.

Le deuxième élément de commutation Q2 présente une deuxième borne 17 qui est reliée à la deuxième borne 16 du premier élément de commutation Q1.

Le troisième et le quatrième éléments de commutation Q3 et Q4 présentent chacun une deuxième borne 18 et 19 qui sont reliées à la masse.

La première inductance 9a et les quatre éléments de commutation Q1, Q2, Q3 et Q4 forment un pont en H :

- la première inductance 9a forme la barre horizontale du H ;
- Q1 et Q3 forment un premier bras du H ;
- Q2 et Q4 forment un deuxième bras du H.

Le dispositif comporte également une charge 20 qui est un condensateur 21. Cette charge 20 est reliée en parallèle du deuxième bras du pont en H, c'est-à-dire que cette charge présente une première borne 22 qui est reliée avec la deuxième borne 17 de Q2 et une deuxième borne 23 qui est reliée à la masse.

La première inductance 9a de l'actionneur est divisée en deux portions de bobine 24 et 25 qui présentent chacune une inductance L1 et L2. Dans l'exemple ici décrit, des deux portions de bobine 24 et 25 sont chacune des demi-bobines présentant le même nombre de spires, avec L1=L2. Les deux demi-bobines 24 et 25 sont couplées par leur noyau magnétique qui est le même pour les deux demi-bobines 24 et 25. On appelle $I_1$ le courant qui traverse la première demi-bobine 24 et $I_2$ le courant qui traverse la deuxième demi-bobine 25.

Le point qui se situe entre les deux demi-bobines 24 et 25 est une borne intermédiaire 26 et, du fait que L1=L2, cette borne intermédiaire est dans le présent exemple un point milieu 26.

Le dispositif est particulièrement remarquable en ce qu'une source d'alimentation 27 est reliée au point milieu 26. Dans ce mode de réalisation, la source d'alimentation présente une tension de 12 V.

L'invention est particulièrement remarquable en ce que la première inductance 9a que l'on souhaite commander est également utilisée pour créer une surtension, sans que la création de cette surtension n'ait d'influence sur l'actionneur.

En effet, bien que les demi-bobines 24 et 25 présentent théoriquement la même inductance L1=L2, en pratique, il existe une inductance de fuite, respectivement Lf1 et Lf2, comme représenté sur la figure 3, et ce sont ces inductances de fuite qui se magnétisent lors de la création de la surtension.

Ces inductances de fuite Lf1 et Lf2 sont très faibles, de sorte qu'elles ne perturbent pas la commande actionneur. Par ailleurs, les effets des inductances L1 et L2 s'annulent mutuellement de sorte que la création de la surtension ne perturbe pas l'actionneur malgré le fait que la bobine de l'actionneur est réutilisée pour créer la surtension.

Le courant $I_B$ issu de la source d'alimentation qui permet de réaliser la surtension aux bornes de la charge est égal à la somme des courants $I_1$ et $I_2$ qui traversent chacune des demi-bobines :

$$I_B = I_1 + I_2.$$

Il est donc possible de piloter l'élévation de tension entre contrôlant la somme des courants $I_1$ et $I_2$ grâce aux éléments de commutation Q1, Q2, Q3 et Q4.

En pratique, pour réaliser l'élévation de tension :

- on ferme les éléments de commutation Q3 et Q4 de manière à magnétiser les inductances de fuite Lf1 et Lf2 ;

- puis on ouvre ensuite Q3 et Q4 et on ferme Q1 et Q2 de manière à ce que l'énergie magnétique stockée par Lf1 et Lf2 se décharge dans le condensateur 21, ce qui permet d'élever la tension V0 aux bornes du condensateur 21.

Par ailleurs, pour commander l'actionneur à l'aide du dispositif il faut commander le courant $I_A$ qui traverse la première inductance 9a. Ce courant $I_A$ est égal à la différence du courant $I_2$ qui traverse la deuxième demi-bobine 24 et du courant $I_1$ qui traverse la première demi-bobine 25 :

$$IA= (I_2- I_1)/2$$

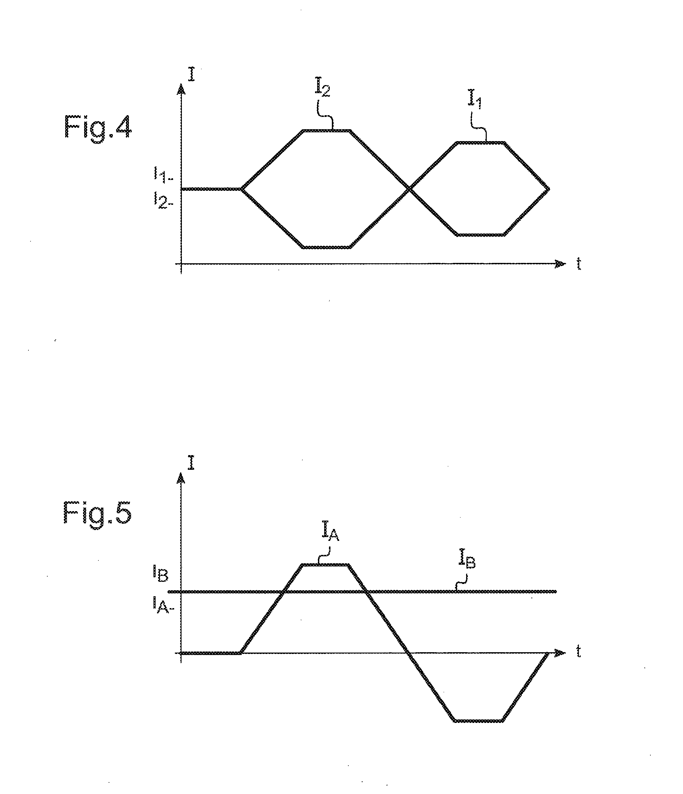

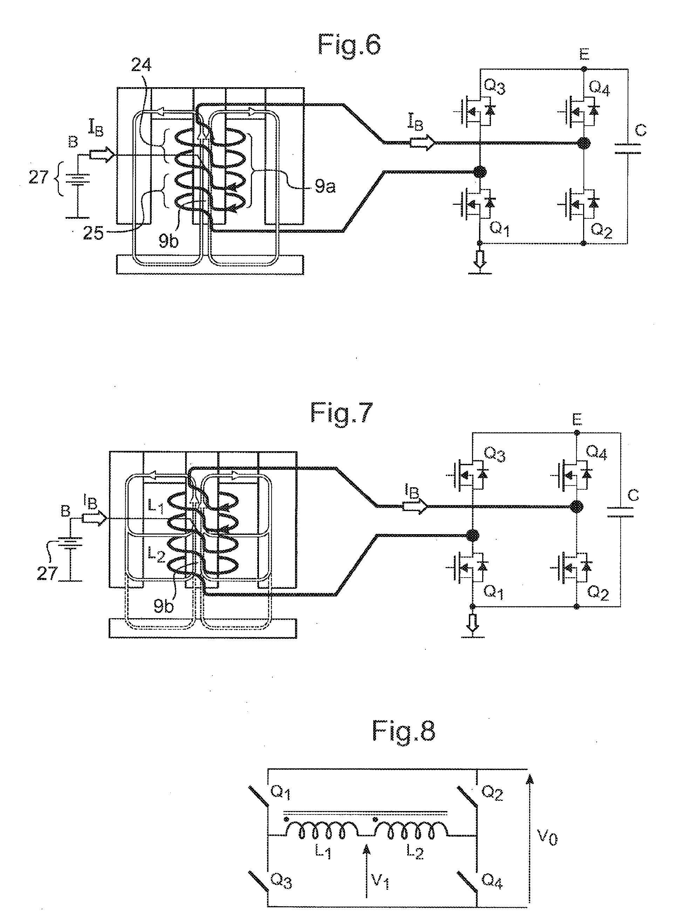

Il est donc possible de commander l'actionneur entre contrôlant la différence des courants $I_1$ et $I_2$ grâce aux éléments de commutation Q1, Q2, Q3 et Q4.
En pratique, le courant $I_A$ nécessaire à la commande de l'actionneur est obtenu en fermant Q1/Q3 tandis que Q2/Q4 sont ouverts, et inversement.
De manière générale, pour avoir une grande force électromotrice, il faut que le courant $I_A$ soit le plus grand possible et donc que les courants $I_1$ et $I_2$ aient des valeurs très éloignées l'une de l'autre.
Par contre, si l'on souhaite uniquement élever la tension sans créer de mouvement de la pièce mobile dans l'actionneur, il faut que les courants $I_1$ et $I_2$ soient égaux. De cette façon, le courant $I_A$ est nul mais pas le courant $I_B$.
Un exemple d'évolution en fonction du temps des courants $I_1$ et $I_2$ est représenté schématiquement sur la figure 4 et l'évolution correspondante des courants $I_A$ et $I_B$ est représenté sur la figure 5.
Comme on peut le voir sur ces figures, grâce au dispositif, il est possible de contrôler les courants $I_1$ et $I_2$ pour simultanément élever la tension et commander l'actionneur. Comme on peut le voir sur ces figures, on peut choisir des valeurs de $I_1$ et $I_2$ telles que le courant $I_B$ d'élévation de la tension soit toujours constant, tandis que le courant $I_A$ varie en fonction des mouvements que l'on souhaite voir effectuer par la pièce mobile de l'actionneur.
Par ailleurs, le dispositif comporte de préférence une diode 28 située entre la source d'alimentation 27 et le point milieu 26.
La diode 28 en série avec la source d'alimentation et le point milieu permet de conserver la dynamique maximale pour la commande de l'actionneur. En effet, comme on peut le voir sur la figure 8, lors du pilotage de l'actionneur, on peut remarquer que chaque demi-bobine ne voit pas la même tension à ses bornes en fonction de l'état des éléments de commutation :

- soit elle voit une tension égale à Vi, qui correspond à la tension aux bornes de la source d'alimentation 27 ;
- soit elle voit une tension égale à V0-Vi.

Cette différence de tension sur chaque demi-bobine va venir diminuer la dynamique de tension dans l'actionneur. Lorsque cette dynamique est nécessaire, on ferme Q1 ou Q2 afin de diminuer le courant $I_B$ qui va jusqu'à s'annuler. La diode se bloque alors, ce qui libère du potentiel sur le point milieu qui redevient libre. Chaque demi-bobine retrouve alors sa pleine dynamique.
Les figures 6 et 7 représentent un exemple de réalisation pratique du dispositif. En effet, pour que le dispositif fonctionne, il est nécessaire que les deux demi-bobines 24 et 25 soient couplées, tout en présentant chacune une inductance de fuite Lf1 et Lf2, ces deux inductances de fuite Lf1 et Lf2 étant distinctes l'une de l'autre.
En pratique, pour obtenir de telles inductances L1, L2, Lf1 et Lf2, la première inductance 9a peut être constituée par deux demi-bobines séparées 24 et 25 qui sont mises en série sur le circuit magnétique. Une fuite importante est ainsi réalisée car des lignes de champs de la demi-bobine 24 se rebouclent sans passer la demi-bobine 25 et inversement.
Dans cet exemple de réalisation, la demi-bobine 25 qui se trouve en bas du montage, présente très peu de fuites comparé à la demi-bobine haute 24. Cette dissymétrie ne pose pas de problème car le dispositif selon l'invention fonctionne à partir du moment où au moins une des deux inductances de fuite Lf1 ou Lf2 est suffisamment importante pour permettre le contrôle du courant de surtension $I_B$.

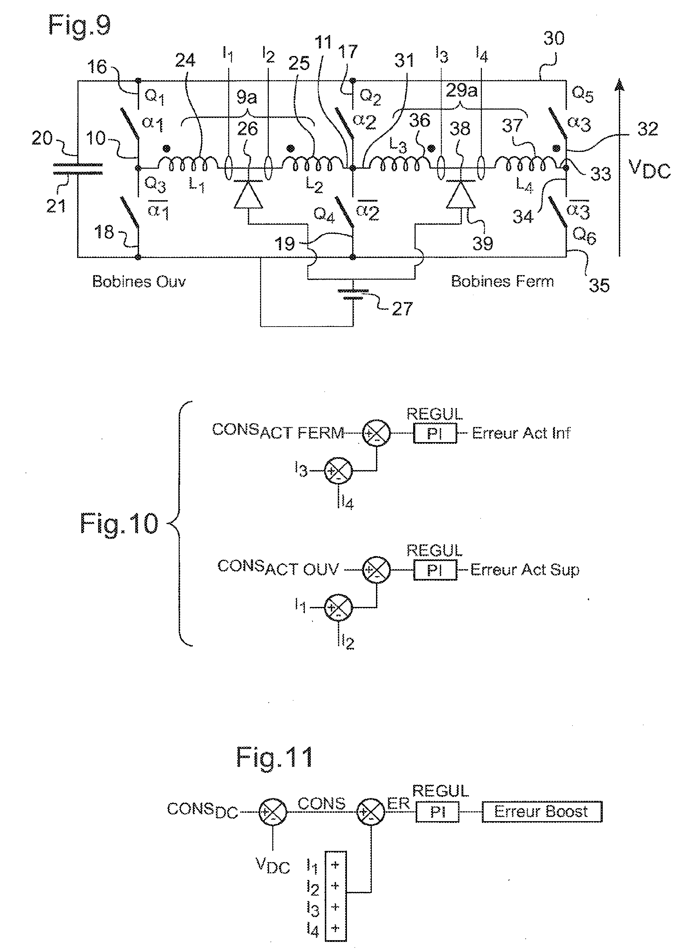

La figure 9 représente un dispositif selon l'invention. Ce dispositif est tout particulièrement adapté pour commander une soupape électromagnétique E-valve multicylindre.
Ce dispositif comporte une première et une deuxième inductance 9a et 29a. Ces deux inductances 9a et 29a sont deux bobines qui font parties de l'actionneur. Dans cet exemple, la première bobine d'actionneur permet de commander l'ouverture de la soupape, tandis que la deuxième bobine permet de commander la fermeture de la soupape.
La première bobine d'actionneur 9a forme avec les quatre éléments de commutation Q1, Q2, Q3 et Q4 un pont en H, la première bobine 9a formant la barre horizontale du H, les éléments de commutation Q1, Q3 formant un bras du H et les éléments de commutation Q2, Q4 formant l'autre bras du H.
Une charge 20 est reliée en parallèle du premier bras du pont en H. La charge 20 est un condensateur 21.
La première inductance 9a est composée de deux portions de bobine 24 et 25, qui présentent chacune une inductance L1 et L2. Dans l'exemple ici décrit, les deux portions de bobine 24 et 25 sont chacune des demi-bobines, avec L1=L2. Le point qui se situe entre les deux demi-bobines 24 et 25 est une borne intermédiaire 26, et, du fait que L1=L2, cette borne est dans le présent exemple un point milieu 26. La première demi-bobine 24 de la première inductance 9a est traversée par un courant $I_1$. La deuxième demi-bobine 25 de la première inductance 9a est traversée par un courant $I_2$.
Une source d'alimentation 27 est reliée au point milieu 26 par l'intermédiaire d'une diode 28.

Le, dispositif selon l'invention comporte en outre une deuxième inductance 29a et deux éléments de commutation supplémentaires Q5 et Q6.

La deuxième inductance 29a présente une première borne 31 qui est reliée à la deuxième borne de la première inductance 9a.

Q5 présente une première borne 30 qui est reliée à la deuxième borne 17 de Q2. Q5 présente également une deuxième borne 32 qui est reliée à la deuxième borne 33 de la deuxième inductance 33.

Q6 présente une première borne 34 qui est reliée à la deuxième borne 33 de la deuxième inductance 29a. Q6 présente une deuxième borne 35 qui est reliée à la masse.

Ainsi, la première inductance 9a et les éléments de commutation Q1, Q2, Q3, Q4 forment un premier pont en H.

La deuxième inductance 29a et les éléments de commutation Q2, Q4 et Q5, Q6 forment un deuxième pont en H, le premier pont en H et le deuxième pont en H ayant un bras en commun.

La deuxième inductance 29a est également divisée en deux portions de bobine 36 et 37 qui présentent chacune une inductance L3 et L4. Dans l'exemple ici décrit, les deux portions de bobine 36 et 37 sont chacune des demi-bobines, avec L3=L4. La première demi-bobine 36 de la deuxième inductance 29a est traversée par un courant $I_3$. La deuxième demi-bobine 37 de la deuxième inductance 29a est traversée par un courant $I_4$.

Entre les deux demi-bobines 36 et 37 de la deuxième inductance se trouve une borne intermédiaire 38, et, du fait que L3=L4, cette borne est dans le présent exemple un deuxième point milieu 38. La source d'alimentation 27 est reliée à ce deuxième point milieu 38, de préférence par l'intermédiaire d'une deuxième diode 39.

Le dispositif fonctionne de la manière suivante: lorsque l'on veut commander l'actionneur, soit on veut ouvrir la soupape et dans ce cas, on créé un courant dans la première inductance 9a en contrôlant le courant $I_2$- $I_1$ avec les éléments de commutation, soit on veut fermer la soupape et dans ce cas, on créé un courant dans la deuxième inductance en contrôlant le courant $I_4$-$I_3$ avec les éléments de commutation. Ainsi, lorsqu'on est en mode « commande de l'actionneur », soit on créé courant $I_A$ dans la première inductance, soit on créé un courant $I_A$ dans la deuxième inductance, mais jamais dans les deux inductances en même temps.

Plus précisément, lorsque l'on veut ouvrir la soupape, on ouvre alternativement les éléments de commutation Q2,Q4 et Q1, Q3, les éléments de commutation Q5, Q6 étant toujours fermés.

Lorsque l'on veut fermer la soupape, on ouvre alternativement les éléments de commutation Q2, Q4 et Q5, Q6, les éléments de commutation Q1, Q3 étant toujours fermés.

Par contre, lorsque l'on veut élever la tension aux bornes de la charge, on contrôle le courant $I_B$ qui est égal à la somme des courants $I_1$, $I_2$, $I_3$, $I_4$ et donc pour élever la tension aux bornes de la charge, on créé un courant de fuite dans les deux inductances 9a et 29a.

Pour cela, on ouvre en même temps les éléments de commutation Q3, Q4, Q6 d'une part et les éléments Q1, Q2, Q5 d'autre part.

Si on ne veut pas de mouvement de la soupape, les éléments de commutation Q1, Q2, Q5 présente le même rapport cyclique que les éléments Q3, Q4, Q6.

Si on veut commander l'ouverture de la soupape en même temps qu'il y a une élévation de la tension, l'élément Q5 garde le même rapport cyclique que les éléments de commutation Q3, Q4 et Q6 et on déséquilibre les rapports cycliques des éléments de commutation Q1 et Q2, c'est-à-dire que l'on choisit des rapports cycliques pour Q3 et Q4 qui sont très différents l'un de l'autre.

Inversement, si on désire fermer la soupape en créant une surtension, l'élément Q1 garde le même rapport cyclique que les éléments de commutation Q3, Q4 et Q6 et on déséquilibre les rapports cycliques des éléments de commutation Q5 et Q6, c'est-à-dire que l'on choisit des rapports cycliques pour Q5 et Q6 qui sont très différents l'un de l'autre.

Des procédés de régulation permettant de contrôler l'élévation de tension et la commande des deux inductances sont expliquées dans la suite en référence aux figures 10 à 12.

Tout d'abord, en référence à la figure 11, la commande de la fonction « élévation de la tension » a lieu de la façon suivante : comme dans le mode de réalisation décrit précédemment, la tension que l'on souhaite élever est la tension $V_{DC}$ aux bornes de la charge 20.

Pour contrôler cette tension $V_{DC}$ aux bornes de la charge, il faut commander la somme des courants qui traversent chacune des demi-bobines, c'est-à-dire la somme des courants $I_1$+ $I_2$+ $I_3$+ $I_4$.

La tension $V_{DC}$ est tout d'abord comparée à une tension de consigne $CONS_{DC}$. L'erreur entre la tension $V_{DC}$ et la tension de consigne $CONS_{DC}$ est compensée par un correcteur de type proportionnel intégral, ce qui permet d'obtenir une commande d'intensité CONSi.

Cette commande CONSi est ensuite comparée à la somme des courants $I_1$+ $I_2$+ $I_3$+ $I_4$. L'erreur entre la commande CONSi et la somme des courants $I_1$+ $I_2$+ $I_3$+ $I_4$ est ensuite compensée par un correcteur de type proportionnel intégral. Cette erreur amplifiée, appelée « erreur boost », est ensuite comparée à un signal en dent de scie pour générer une commande de modulation de largeur d'impulsion afin de commander l'ouverture et la fermeture des éléments de commutation afin d'avoir la tension $V_{DC}$ voulue.

Ce procédé de régulation permet de compenser une déviation de la tension $V_{DC}$. Par exemple, si la tension $V_{DC}$ est trop importante, l'erreur entre la tension $V_{DC}$ et la tension de consigne $CONS_{DC}$ est négative, ce qui tend à faire diminuer la consigne de courant CONSi. Ainsi, la somme des courants $I_1$+ $I_2$+ $I_3$+$I_4$ diminue. La con-

sommation propre de l'actionneur et/ou de toutes les autres charges raccordées au réseau contribue à faire diminuer la tension. Inversement, on a le comportement inverse si la tension $V_{DC}$ est trop basse.

La figure 10 représente schématiquement le procédé de commande de l'actionneur selon l'invention. Tout comme dans le mode de réalisation précédent, pour commander la première inductance 9a, il faut commander la différence des courants $I_1$ et $I_2$ qui traversent les deux demi-bobines de la première inductance. De même, pour commander la deuxième inductance 29a, il faut commander la différence des courants $I_3$ et $I_4$ qui traversent les deux demi-bobines de la deuxième inductance. Ces différences de courant sont l'image de la force magnétomotrice créée par chacune des deux inductances 9a et 29a. La régulation de ces courants est connue de l'art antérieur.

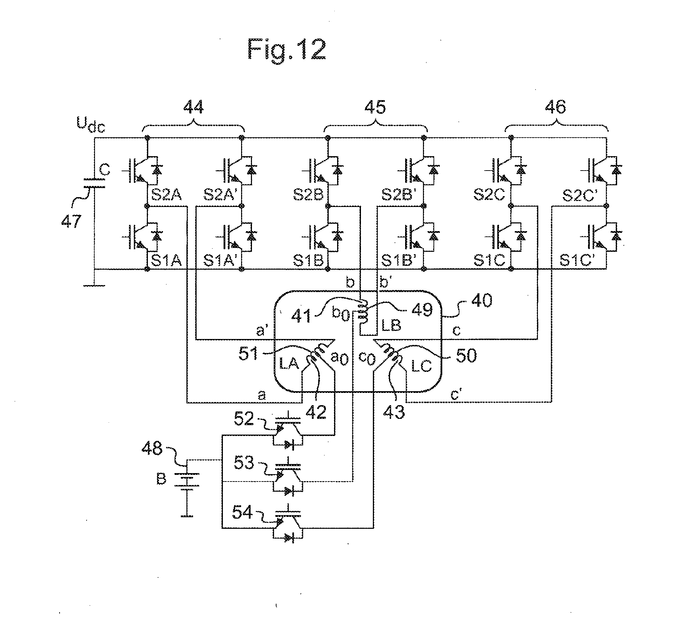

La figure 12 illustre l'utilisation de trois dispositifs tels que décrits en référence à la figure 2 dans un véhicule électrique. Ce véhicule électrique comporte un moteur polyphasé 40 qui comprend trois inductances qui sont trois bobines 41, 42 et 43. Chaque bobine appartient à un pont en H, respectivement 44, 45 et 46. Les ponts en H sont reliés entre eux en parallèle. Une charge 47 qui est un condensateur est reliée en parallèle avec les ponts en H. Chaque bobine 41, 42, 43 est divisée en deux portions de bobine. Une borne intermédiaire 49, 50, 51 se trouve entre chaque portion de bobine d'une même bobine. Chaque borne intermédiaire 49, 50, 51 est relié à une source d'alimentation constituée par la batterie 48 du véhicule électrique par l'intermédiaire d'une diode, respectivement 52, 53, 54.

Ainsi, comme on peut le voir avec ce mode de réalisation de l'invention, l'invention n'est pas limitée au cas où un seul pont en H est relié à la charge et on peut relier différents ponts en H à la même charge sans sortir du cadre de l'invention.

Ainsi, le dispositif selon l'invention permet d'élever la tension de la batterie du véhicule électrique, sans avoir recours à un dispositif élévateur de tension additionnel, ce qui permet de limiter le nombre d'inductances utilisées.

Naturellement, l'invention n'est pas limitée aux modes de réalisation décrits ci-dessus et on peut envisager différentes variantes de ces modes de réalisation sans sortir du cadre de l'invention. Notamment, des modes de réalisation donnés dans la description des figures sont relatifs à des portions de bobine qui sont dans ces exemples des demi-bobines comportant une borne intermédiaire qui est de ce fait un point milieu, étant entendu que ces mêmes mode de réalisation peuvent être mis en oeuvre avec des portions de bobine comportant des nombres de spires différents et donc une inductance différente, du moment que les courants injectés dans chaque portion de bobine pour réaliser la fonction surtension soient dans un rapport sensiblement égal au rapport des inductances, de sorte que la force électromotrice globale de l'inductance soit nulle.

## Revendications

1. Dispositif pour l'auto-génération d'une surtension et la commande simultanée d'un actionneur comportant au moins une première inductance (9a), la première inductance (9a) étant formée par deux portions de bobine (24, 25) couplées entre lesquelles se trouve une borne intermédiaire (26),

   - la première inductance (9a) étant reliée à quatre éléments de commutation Q1, Q2, Q3 et Q4, les quatre éléments de commutation Q1, Q2, Q3 et Q4 formant avec la première inductance (9a) un premier pont en H, les éléments de commutation Q1 et Q3 formant un premier bras du H, les éléments de commutation Q2 et Q4 formant un deuxième bras du H, la première inductance formant la barre horizontale du H ;
   - une charge (20) étant reliée en parallèle d'un des bras du pont en H ;
   - la borne intermédiaire (26) de la première inductance (9a) étant reliée à une source d'alimentation(27)

   **caractérisé en ce qu'**il comporte :

   - une deuxième inductance (29a), la deuxième inductance (29a) étant formée par deux portions de bobine (36, 37) couplées entre lesquelles se trouve une borne intermédiaire (38),
   - deux éléments de commutation supplémentaires Q5 et Q6, ces deux éléments de commutations supplémentaires Q5 et Q6 et la deuxième inductance (29a) étant reliés au premier pont en H de manière à ce que les deux éléments de commutation supplémentaires Q5, Q6 et la deuxième inductance (29a) forment avec un des bras du premier pont en H un deuxième pont en H;
   la source d'alimentation (27) étant reliée à la borne intermédiaire (38) de la deuxième inductance (29a).

2. Dispositif selon la revendication 1, une première diode (28) étant insérée entre la source d'alimentation (27) et la borne intermédiaire (26).

3. Dispositif selon la revendication 1 ou 2, la source d'alimentation (27) étant une source de tension continue.

4. Dispositif selon l'une quelconque des revendications précédentes, les deux portions de bobine (24,25) étant enroulées autour d'un même noyau magnétique (9b).

5. Dispositif selon l'une des revendications précédentes, les deux portions de bobine (24, 25) étant des demi-bobines présentant le même nombre de spires, la borne intermédiaire (26) étant alors un point milieu.

6. Dispositif selon l'une quelconque des revendications précédentes, la charge (20) étant constituée par un condensateur (21).

7. Dispositif selon l'une quelconque des revendications précédentes , une deuxième diode (39) est insérée entre la borne intermédiaire (38) de la deuxième inductance (29a) et la source d'alimentation (27).

8. Dispositif selon l'une quelconque des revendications précédentes, les deux portions de bobine (36, 37) de la deuxième inductance (29a) étant enroulées autour d'un même second noyau magnétique.

9. Dispositif selon l'une quelconque des revendications précédentes, les deux portions de bobine (36, 37) étant des demi-bobines présentant le même nombre de spires, la borne intermédiaire (38) étant alors un point milieu.

10. Dispositif selon l'une quelconque des revendications précédentes, étant configuré pour commander au moins un actionneur de soupape électromagnétique.

11. Ensemble comprenant :

- le dispositif selon la revendication 10 et,
- au moins un actionneur de soupape électromagnétique.

12. Procédé d'élévation de la tension aux bornes de la charge dans le dispositif selon l'une quelconque des revendications là 10, **caractérisé en ce qu'**il comprend une étape de contrôle, à l'aide des éléments de commutation, de la somme des courants ($I_1$+ $I_2$, $I_1$+ $I_2$+ $I_3$+ $I_4$) qui parcourent chacune des portions de bobine.

13. Procédé de commande de l'actionneur avec le dispositif selon l'une quelconque des revendications 1 à 10, comportant une étape de contrôle, à l'aide des éléments de commutation, de la différence des courants ($I_2$- $I_1$) qui parcourent chaque portion de bobine de la première inductance (9a).

14. Procédé de commande de l'actionneur avec le dispositif selon l'une quelconque des revendications 1 à 8, comportant une étape de contrôle, à l'aide des éléments de commutation, de la différence des courants ($I_4$- $I_3$) qui parcourent chaque portion de bobine de la deuxième inductance (19a).

**Patentansprüche**

1. Vorrichtung zur Selbstgenerierung einer Überspannung und gleichzeitigen Steuerung eines Aktors, der mindestens eine erste Drosselspule (9a) aufweist, wobei die erste Drosselspule (9a) von zwei gekoppelten Spulenabschnitten (24, 25) gebildet wird, zwischen denen sich eine Zwischenklemme (26) befindet,

- wobei die erste Drosselspule (9a) mit vier Schaltelementen Q1, Q2, Q3 und Q4 verbunden ist, wobei die vier Schaltelemente Q1, Q2, Q3 und Q4 mit der ersten Drosselspule (9a) eine erste H-Brücke bilden, wobei die Schaltelemente Q1 und Q3 einen ersten Schenkel des H bilden, die Schaltelemente Q2 und Q4 einen zweiten Schenkel des H bilden, die erste Drosselspule den waagrechten Balken des H bildet;
- wobei eine Last (20) parallel zu einem der Schenkel der H-Brücke verbunden ist;
- wobei die Zwischenklemme (26) der ersten Drosselspule (9a) mit einer Versorgungsquelle (27) verbunden ist,

**dadurch gekennzeichnet, dass** sie aufweist:

- eine zweite Drosselspule (29a), wobei die zweite Drosselspule (29a) von zwei gekoppelten Spulenabschnitten (36, 37) gebildet wird, zwischen denen sich eine Zwischenklemme (38) befindet,
- zwei zusätzliche Schaltelemente Q5 und Q6, wobei diese zwei zusätzlichen Schaltelemente Q5 und Q6 und die zweite Drosselspule (29a) mit der ersten H-Brücke so verbunden sind, dass die zwei zusätzlichen Schaltelemente Q5, Q6 und die zweite Drosselspule (29a) mit einem der Schenkel der ersten H-Brücke eine zweite H-Brücke bilden; wobei die Versorgungsquelle (27) mit der Zwischenklemme (38) der zweiten Drosselspule (29a) verbunden ist.

2. Vorrichtung nach Anspruch 1, wobei eine erste Diode (28) zwischen die Versorgungsquelle (27) und die Zwischenklemme (26) eingefügt ist.

3. Vorrichtung nach Anspruch 1 oder 2, wobei die Versorgungsquelle (27) eine Gleichspannungsquelle ist.

4. Vorrichtung nach einem der vorhergehenden Ansprüche, wobei die zwei Spulenabschnitte (24, 25) um den gleichen Magnetkern (9b) gewickelt sind.

5. Vorrichtung nach einem der vorhergehenden Ansprüche, wobei die zwei Spulenabschnitte (24, 25) Halbspulen sind, die die gleiche Anzahl von Windungen aufweisen, wobei die Zwischenklemme (26) dann ein Mittelpunkt ist.

6. Vorrichtung nach einem der vorhergehenden Ansprüche, wobei die Last (20) aus einem Kondensator (21) besteht.

7. Vorrichtung nach einem der vorhergehenden Ansprüche, wobei eine zweite Diode (39) zwischen die Zwischenklemme (38) der zweiten Drosselspule (29a) und die Versorgungsquelle (27) eingefügt ist.

8. Vorrichtung nach einem der vorhergehenden Ansprüche, wobei die zwei Spulenabschnitte (36, 37) der zweiten Drosselspule (29a) um den gleichen zweiten Magnetkern gewickelt sind.

9. Vorrichtung nach einem der vorhergehenden Ansprüche, wobei die zwei Spulenabschnitte (36, 37) Halbspulen sind, die die gleiche Anzahl von Windungen aufweisen, wobei die Zwischenklemme (38) dann ein Mittelpunkt ist.

10. Vorrichtung nach einem der vorhergehenden Ansprüche, die konfiguriert ist, mindestens einen Aktor eines elektromagnetischen Ventils zu steuern.

11. Einheit, die enthält:

   - die Vorrichtung nach Anspruch 10 und
   - mindestens einen Aktor eines elektromagnetischen Ventils.

12. Verfahren zur Erhöhung der Spannung an den Klemmen der Last in der Vorrichtung nach einem der Ansprüche 1 bis 10, **dadurch gekennzeichnet, dass** es einen Schritt der Kontrolle, mit Hilfe der Schaltelemente, der Summe der Ströme ($I_1$+$I_2$, $I_1$+$I_2$+$I_3$+$I_4$) enthält, die jeden der Spulenabschnitte durchfließen.

13. Verfahren zum Steuern des Aktors mit der Vorrichtung nach einem der Ansprüche 1 bis 10, das einen Schritt der Kontrolle, mit Hilfe der Schaltelemente, der Differenz der Ströme ($I_2$-$I_1$) aufweist, die jeden Spulenabschnitt der ersten Drosselspule (9a) durchfließen.

14. Verfahren zum Steuern des Aktors mit der Vorrichtung nach einem der Ansprüche 1 bis 8, das einen Schritt der Kontrolle, mit Hilfe der Schaltelemente, der Differenz der Ströme ($I_4$-$I_3$) aufweist, die jeden Spulenabschnitt der zweiten Drosselspule (19a) durchfließen.

**Claims**

1. Device for the self-generation of an overvoltage and the simultaneous control of an actuator comprising at least one first inductance (9a), the first inductance (9a) being formed by two coupled portions of coil (24, 25) between which there is an intermediate terminal (26),

   - the first inductance (9a) being linked to four switching elements Q1, Q2, Q3 and Q4, the four switching elements Q1, Q2, Q3 and Q4 forming, with the first inductance (9a), a first H-configuration bridge, the switching elements Q1 and Q3 forming a first arm of the H, the switching elements Q2 and Q4 forming a second arm of the H, the first inductance forming the horizontal bar of H;
   - a load (20) being linked in parallel to one of the arms of the H-configuration bridge;
   - the intermediate terminal (26) of the first inductance (9a) being linked to a power source (27)

   **characterized in that** it comprises:

   - a second inductance (29a), the second inductance (29a) being formed by two coupled portions of coil (36, 37) between which there is an intermediate terminal (38),
   - two additional switching elements Q5 and Q6, these two additional switching elements Q5 and Q6 and the second inductance (29a) being linked to the first H-configuration bridge in such a way that the two additional switching elements Q5, Q6 and the second inductance (29a) form, with one of the arms of the first H-configuration bridge, a second H-configuration bridge;
   the power source (27) being linked to the intermediate terminal (38) of the second inductance (29a).

2. Device according to Claim 1, a first diode (28) being inserted between the power source (27) and the intermediate terminal (26).

3. Device according to Claim 1 or 2, the power source (27) being a DC voltage source.

4. Device according to any one of the preceding claims, the two portions of coil (24, 25) being wound around one and the same magnetic core (9b).

5. Device according to one of the preceding claims, the two portions of coil (24, 25) being half-coils having the same number of turns, the intermediate terminal (26) then being a mid-point.

**6.** Device according to any one of the preceding claims, the load (20) consisting of a capacitor (21).

**7.** Device according to any one of the preceding claims, a second diode (39) is inserted between the intermediate terminal (38) of the second inductance (29a) and the power source (27).

**8.** Device according to any one of the preceding claims, the two portions of coil (36, 37) of the second inductance (29a) being wound around one and the same second magnetic core.

**9.** Device according to any one of the preceding claims, the two portions of coil (36, 37) being half-coils having the same number of turns, the intermediate terminal (38) then being a mid-point.

**10.** Device according to any one of the preceding claims, being configured to control at least one electromagnetic valve actuator.

**11.** Assembly comprising:

- the device according to Claim 10 and,
- at least one electromagnetic valve actuator.

**12.** Method for raising the voltage at the terminals of the load in the device according to any one of Claims 1 to 10, **characterized in that** it comprises a step of controlling, using the switching elements, the sum of the currents ($I_1 + I_2$, $I_1 + I_2 + I_3 + I_4$) which flow through each of the portions of coil.

**13.** Method for controlling the actuator with the device according to any one of Claims 1 to 10, comprising a step of controlling, using the switching elements, the difference in the currents ($I_2 - I_1$) which flow through each portion of coil of the first inductance (9a).

**14.** Method for controlling the actuator with the device according to any one of Claims 1 to 8, comprising a step of controlling, using the switching elements, the difference in the currents ($I_4 - I_3$) which flow through each portion of coil of the second inductance (19a).

EP 2 638 271 B1

Fig.1

Fig.2

Fig.3

Fig.4

Fig.5

Fig.6

Fig.7

Fig.8

## Fig.9

## Fig.10

## Fig.11

Fig.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6948461 B
- US 6175484 B
- US 2006132234 A
- DE 102008012942